## Europäisches Patentamt

(19) **European Patent Office**

**Office européen des brevets**

(11) Veröffentlichungsnummer: **0 087 492**
**B1**

(12) **EUROPÄISCHE PATENTSCHRIFT**

(45) Veröffentlichungstag der Patentschrift:
**07.01.88**

(21) Anmeldenummer: **82102852.9**

(22) Anmeldetag: **03.04.82**

(51) Int. Cl.⁴: **E 21 F 15/00**

(54) Verfahren zur Verwertung von bei der Aufbereitung anfallenden Waschbergen.

(30) Priorität: **02.03.82 DE 3207390**

(43) Veröffentlichungstag der Anmeldung:
**07.09.83 Patentblatt 83/36**

(45) Bekanntmachung des Hinweises auf die Patenterteilung:
**07.01.88 Patentblatt 88/1**

(84) Benannte Vertragsstaaten:
**AT BE CH DE FR GB IT LI LU NL SE**

(56) Entgegenhaltungen:
**EP - A - 0 001 816**
**DE - B - 1 261 467**
**FR - A - 1 585 658**
**FR - A - 2 311 765**
**GB - A - 1 526 145**

(73) Patentinhaber: **GTG Gesteins- und Tiefbau GmbH,**
**Karlstrasse 37-39, D-4350 Recklinghausen (DE)**

(72) Erfinder: **Dürrfeld, Werner, Dr.-Ing., Buschstrasse 55,**
**D-4352 Herten i.W. (DE)**
Erfinder: **Enders, Klaus, Dipl.-Ing., Voglerstrasse 4,**
**D-3452 Bodenwerder (DE)**
Erfinder: **Köhling, Rolf, Dr.-Ing., Lohbusch 1,**
**D-4630 Bochum 6 (DE)**

(74) Vertreter: **Herrmann-Trentepohl, Werner, Dipl.-Ing. et al,**
**Schaeferstrasse 18, D-4690 Herne 1 (DE)**

**Beschreibung**

Die Erfindung betrifft ein Verfahren zur Verwertung von bei der Aufbereitung anfallenden Waschbergen, bei dem die Waschberge mit einem vorzugsweise hydraulischen Bindemittel versetzt und als beispielsweise pneumatisch förderbarer Baustoff im Untertagebetrieb eingesetzt werden.

Insbesondere werden erfindungsgemäss die bei der Aufbereitung von Rohwaschkohle des Untertagebergbaues auf Steinkohle anfallenden Waschberge verwertet. Obwohl die Erfindung auf Waschberge dieser Herkunft nicht beschränkt ist, wird sie im folgenden anhand solcher Waschberge näher erläutert.

Der nach dem erfindungsgemässen Verfahren hergestellte Baustoff eignet sich vor allem als Dammbaustoff, d.h. zur Herstellung von Strecken mit Begleitdämmen wobei der zumeist pneumatisch geförderte Baustoff bei Trockenförderung an der Austrittsstelle mit dem erforderlichen Anmachwasser versetzt wird oder in breiartiger Konsistenz hydromechanisch gefördert wird. Ein solcher Baustoff eignet sich auch für die Hinterfüllung von Streckenausbau. Ein besonderes Anwendungsgebiet entsprechender Baustoffe ist das Füllen von Gewebeschläuchen, mit denen Streckenbaue aus Stahlprofil unmittelbar nach ihrer Komplettierung an das umgebende Gebirge angeschlossen werden.

Von solchen Baustoffen verlangt man einerseits Eigenschaften, welche eine geeignete Bereitstellung und Förderung, insbesondere ein Verblasen ermöglichen. Dazu gehört u.a. eine verhältnismässig geringe abrasive Einwirkung des Baustoffes auf die verschiedenen Teile des pneumatischen Fördersystems, insbesondere auf die Vorrichtungen, die zur Einschleusung des Baustoffes in die weiterführenden Rohrleitungen dienen. Darüber hinaus spielen die Festigkeitsentwicklung und die Endfestigkeit des aus dem Dammbaustoff bestehenden Kunststeinkörpers eine entscheidende Rolle. Insbesondere wird angestrebt eine Druckfestigkeit nach 1 Stunde von ca. 1 N/mm² und nach 5 Stunden von etwa 5 N/mm². Dies wird durch geringe, wirtschaftlich und physiologisch vertretbare chemische Zusätze von sogenannten Erstarrungsbeschleunigern oder Anregern herbeigeführt. Hierbei handelt es sich zumeist um anorganische Salze. In diesem Umfang ist auch der Einsatz von bekannten Verflüssigern, Staubminderern, Gleit- und Pumphilfen und ähnlichen Zusätzen vertretbar.

Die sinnvolle Verwertung von Waschbergen, die beispielsweise bei der Steinkohlenaufbereitung anfallen, vermindert die für derartige Aufbereitungsabgänge vorzuhaltenden Haldenkapazitäten oder anderweitigen Endablagerungen. Waschberge fallen bekanntlich in erheblichem Umfang an, weil sich das Ausbringen, d.h. der auf die Förderkohle umgerechnete Prozentsatz der verwertbaren Förderung aus verschiedenen Gründen, z.B. durch die Mechanisierung unter Tage erfahrungsgemäss vermindert. Waschberge sind Erzeugnisse der Dichtesortierung, welcher die Rohwaschkohle unterworfen wird. Deswegen enthalten Waschberge mehr oder weniger grosse Anteile weicher Gesteinsarten, wie z.B. Schieferton, die u.a. nicht witterungsbeständig sind und sich daher in sehr begrenztem Umfang als Füllmaterial u.a. im Strassenbau eignen.

Bei der Verwertung solcher Stoffe spielt auch der Transportaufwand eine erhebliche Rolle, so dass die Verwertung unter Tage z.B. als Blasversatz ein seit langem bekanntes Verwertungsverfahren für Waschberge darstellt, bei dem man die sogenannten grünen, d.h. die aus der Dichtesortierung der Rohwaschkohle stammenden Waschberge allein zum Verblasen grösserer Hohlräume, insbesondere des sogenannten Alten Mannes einsetzt. Diese Verwertungsverfahren verlieren allerdings mit zunehmender Mechanisierung unter Tage an Bedeutung. Einerseits ist mit der Mechanisierung der Steinkohlengewinnung in den vergangenen Jahrzehnten der Anteil an Bergen in der Rohförderkohle von z.B. rund 10% auf rund 50% gestiegen. Da sich bei der Verwertung der anfallenden Waschberge eine entgegengesetzte Tendenz herausgebildet hat, sind umfangreiche Aufhaldungen und vielfältige damit verbundene Umweltprobleme entstanden.

Die Erfindung geht deswegen von einem vorbekannten Verfahren aus, bei dem die grünen, d.h. die aus der Dichtesortierung der Rohwaschkohle stammenden Waschberge mit einem Bindemittel versetzt und auf diese Weise ein Baustoff gewonnen wird, den man für den Bau der eingangs bezeichneten Strecken Begleitdämme eingesetzt hat. Dieses Verwertungsverfahren hat sich in der Praxis jedoch nicht durchsetzen können, weil nach ihm hergestellte Dämme nicht die geforderten Frühfestigkeiten erreichen und auch ihre Endfestigkeiten unter dem geforderten Minimum bleiben.

Es ist auch bekannt, die grünen Waschberge durch Umarbeitung in einen für derartige Baustoffe geeigneteren stofflichen Zustand zu versetzen, indem man die grünen Waschberge zunächst keramisiert. Die dazu erforderliche thermische Behandlung ist jedoch relativ aufwendig. Sie überführt die grünen Waschberge in einen Zustand, in dem sie stark abrasive Wirkungen auf die Fördereinrichtungen ausüben. Gleichwohl sind die hiermit erzielten Früh- und Endfestigkeiten nicht ausreichend. Für grössere Verwertungsmengen kommt daher ein solches Verfahren ohnehin nicht in Betracht.

Der Erfindung liegt die Aufgabe zugrunde, grüne Waschberge einer sinnvollen Verwertung in einem Baustoff zuzuführen, der bei seiner Benutzung als Dammbaustoff mit einem tragbaren Aufwand an den eingangs beschriebenen Zusätzen eine ausreichende Früh- und Endfestigkeit erreicht.

Diese Aufgabe löst die Erfindung dadurch, dass die grünen Waschberge klassiert und der dadurch mit den harten Bestandteilen angereicherte Siebrückstand auf eine vorgegebene Siebkennlinie heruntergebrochen wird, worauf das gebrochene Gut entweder als Fegekorn oder als Zuschlagstoff zu einem einen Zusatzstoff und/oder das Bindemittelmittel enthaltenden Baustoff zusammengesetzt wird.

Erfindungsgemäss wird das Stoffgemisch, das die grünen Waschberge darstellen, durch eine klassierende Sortierung, die sich an die Dichtesortierung der Rohwaschkohle bei ca. 1,8 g/cm³ anschliesst, mit den härteren Gesteinsarten, wie Sandstein und Sandschieferton angereichert, während die weicheren Bestandteile, wie Schieferton o.dgl. verarmt werden, weil diese Bestandteile der grünen Waschberge bevorzugt in den Siebdurchgang geraten. Das erfindungsgemässe Verfahren besteht weiter darin, über den Anteil der so erhaltenen grünen Waschberge die für den jeweiligen Verarbeitungszweck des Baustoffes unter Tage geforderten Eigenschaften einzustellen. Wenn man mit dem an die klassierende Sortierung angeschlossenen Brechvorgang das Gut auf die erforderliche Korngrösse gebracht hat, z.B. mit den üblichen Dammbaustoffen auf Zementbasis Streckenbegleitdämme errichten will, dann ist es möglich, die unangenehmen Begleiteigenschaften dieser Baustoffe, welche auf dem Klebe- bzw. Haftvermögen in den Rohrleitungen beruhen, zu beseitigen, indem man einen entsprechenden Prozentsatz von den sogenannten grünen Waschbergen als sogenanntes Fegekorn einsetzt.

Im allgemeinen wird man indessen im Interesse möglichst grosser Verwertungsmengen höhere Prozentsätze an den erfindungsgemäss behandelten Waschbergen einsetzen wollen. Es hat sich herausgestellt, dass das innerhalb der angegebenen Prozentsätze zu einem grossen Masse mit dem neuen Baustoff möglich ist, wobei man allerdings dem Baustoff bei seinem Einsatz als Dammbaustoff die eingangs beschriebenen Erstarrungsbeschleuniger für die geforderten Frühfestigkeiten in der Regel zusetzen wird. Gegebenenfalls können durch weitere chemische Zusätze die Verarbeitungseigenschaften bzw. die Materialeigenschaften gesteuert werden. Im allgemeinen wird man aber mit einer Menge an solchen Zusätzen auskommen, die maximal 10% ausmacht.

Als Bindemittel kommen in erster Linie die üblichen hierfür bekannten Stoffe in Betracht, d.h. ausser hydraulischem Kalk auch Zement. Wegen des Untertageeinsatzes des erfindungsgemässen Baustoffes und damit auch für solche Einsatzfälle, in denen mit anstehendem Wasser nicht gerechnet zu werden braucht, kann man die hydraulischen Bindemittel ganz oder doch teilweise durch nichthydraulische Bindemittel ersetzen, die man für diese Zwecke bereits kennt, wie z.B. Gips, insbesondere in Form von 2-Halbhydrat, das man aber bislang mit grünen Waschbergen nicht für hinreichend frühfeste Streckenbegleitdämme einsetzen konnte. Ausserdem kommen auch andere nichthydraulische Bindemittel wie Kalk oder Anhydrit in Betracht.

Der mindestens teilweise Ersatz des Bindemittels durch einen Zusatzstoff, der seinerseits ebenfalls aus der Steinkohlenaufbereitung stammt, würde die Ableitungsabgänge weiter vermindern.

Das Problem lässt sich durch Verwendung der Abbrände von Wirbelschichtfeuerungen in denen Flotationsberge verbrannt werden, als Zusatzstoff lösen. Diese Technik ist für sich bekannt und hat auch bereits zu praktischen Anwendungen der Abbrände u.a. als Zusatzstoff zur Herstellung von Putz- und Mauerbindern für die Bauindustrie geführt. Daraus weiss man bereits, dass solche Abbrände in erheblichem Umfang den Zement ersetzen können und dann die erforderlichen Festigkeiten liefern und dass die Zementzusätze dann die Wirtschaftlichkeit derartiger Bindemittel nicht gefährden. Es hat sich aber nun gezeigt, dass solche Abbrände als Zusatzstoff teilweise das Bindemittel ersetzen können, das in dem erfindungsgemässen Baustoff verwendet werden muss.

Dadurch können die beschriebenen Abbrände für den Untertageeinsatz nutzbar gemacht werden, weil man sie mit den erfindungsgemäss aufbereiteten grünen Waschbergen mischt. In der Mischung ergeben sich die geforderten Festigkeiten und ersetzen infolge ihrer latent-hydraulischen puzzolanähnlichen Eigenschaften einen Grossteil des Bindemittels.

Das Stoffgemenge der Waschberge hat eine schwankende stoffliche Zusammensetzung. Folglich kann der Anteil an Gesteinsarten, der für den erfindungsgemässen Baustoff verwendbar ist, seinerseits erheblichen Schwankungen unterliegen. Wenn die Anteile der verwertbaren Gesteinsarten stark absinken, kann sich eine Ausführungsform der Erfindung empfehlen, gemäss der die Waschberge nach ihrer Klassierung einer erneuten Dichtesortierung unterworfen werden, worauf das leichtere Gut verworfen und das schwerere Gut für den Baustoff verwendet wird.

Unter diesen oder ähnlichen Voraussetzungen und insbesondere dann, wenn man wie im Fall der Verwendung als Fegekorn nur verhältnismässig geringe anteilige Mengen von klassierend sortierten Waschbergen dem Baustoff zusetzen will, kann man den Siebdurchgang der klassierenden Sortierung der grünen Waschberge vor der Zusammensetzung zu dem Baustoff auch keramisieren. Dieses Verfahren wird sich indessen nur dort empfehlen, wo man den für seine Wirtschaftlichkeit entscheidenen Wärmeeinsatz kostengünstig bereitstellen kann.

In der Praxis kann man das erfindungsgemässe Verfahren so führen, dass die aus der Dichtesortierung der Förderkohle kommenden Waschberge durch eine Grobkornabsiebung sortiert und das grobe Korn auf eine optimale Siebkennlinie heruntergebrochen wird. Gegebenenfalls kann die angestrebte Sieblinie durch Mischen des Zuschlages aus den zuvor durch Absiebung gewonnenen Fraktionen zusammengesetzt werden.

Eine Siebkennlinie dieser Art ist z.B. die folgende:

| Siebdurchgang in % | Siebweite in mm |
|---|---|
| 10 | 0,25 |
| 20 | 0,50 |
| 30 | 1,0 |

| Siebdurchgang in % | Siebweite in mm |
|---|---|
| 45 | 2,0 |
| 65 | 4,0 |
| 100 | 8,0 |

Ein anderes Siebkennlinienbeispiel, das sich insbesondere als Zuschlag für Spritzmörtel eignet, ist das folgende:

| Siebdurchgang in % | Siebweite in mm |
|---|---|
| 15 | 0,25 |
| 30 | 0,50 |
| 45 | 1,0 |
| 70 | 2,0 |
| 100 | 4,0 |

Will man gemäss der oben beschriebenen Ausführungsform der Erfindung Wirbelschichtfeuerungsabbrände zusetzen, wie sie bei der Verbrennung von Flotationsbergen in Wirbelschichtfeuerungsanlagen anfallen, dann ist zu beachten, dass die Abbrände ähnlich wie Hüttensande oder Flugaschen aus Kesselfeuerungen latent-hydralische puzzolanähnliche Eigenschaften haben und dadurch, sofern diese durch Anregung geweckt werden, zu Bindemitteln werden. Sind die Abbrände grob, können sie durch Mahlung gefeint werden. Dadurch lassen sich die Bindemitteleigenschaften in besonderer Weise aktivieren.

Im Wirbelschichtfeuerungsprozess fallen innerhalb der Anlage in mehreren Bereichen Abbrände unterschiedlicher Kornzusammensetzung und unterschiedlicher thermischer Beaufschlagung an. Diese können einzeln mit ihren spezifischen Eigenschaften als Zusatzstoff eingesetzt werden. Auch kann durch gezielte mengenmässige Zusammensetzung des Gesamtabbrandes eine Beeinflussung des Stoffverhaltens erreicht werden.

Für den erfindungsgemässen Baustoff eignen sich Zement oder andere basische Bindemittel, wie z.B. gebrannter Kalk. Zusammen mit Wirbelschichtfeuerungsabbränden der beschriebenen Art üben diese Bindemittel eine Doppelfunktion aus. Sie erbringen die Dichtigkeitseigenschaften der aus dem Baustoff hergestellten Körper. Sie regen andererseits die Wirbelschichtfeuerungsbrände an und machen sie dadurch zu hydraulischen Bindemitteln.

Gegenüber den vorbekannten Baustoffen für den Untertagebetrieb hat der erfindungsgemässe Baustoff eine grosse Anzahl von Vorteilen: Der Anteil von Waschbergen aus der Steinkohlenaufbereitung beträgt an dem erfindungsgemässen Baustoff bis zu 90 Gew.-%. Bei Einsatz von Wirbelschichtbränden kann der Mengenanteil von Aufbereitungsabgängen noch erhöht werden.

Durch die Erfindung, nämlich durch die klassierende Sortierung ist es auf wirtschaftlich tragbare Weise möglich, ein an sich inhomogenes, nur gering druckfestes und nicht witterungsbeständiges Abfallerzeugnis der Steinkohlenaufbereitung zu einem ausreichend homogenen Zuschlagstoff innerhalb eines hauptsächlich unter Tage verwendbaren Baustoffes zu veredeln, der den gebirgsmechanischen Anforderungen, z.B. an Streckenbegleitdämmen voll gerecht wird.

Bei der Verfeuerung von Flotationsbergen in Wirbelschichtfeuerungsanlagen werden verschiedene Abbrandqualitäten erzeugt. Die Erfindung ermöglicht es, durch Mengenvariation der einzelnen Spezies den Baustoff an die Einsatzbedingungen optimal anzupassen. Dies gilt auch für die in dem Baustoff enthaltenen Waschberge.

Die Verwendung von Abgängen der Steinkohlenaufbereitung als Rohstoff für die Grubenbaustoffproduktion ermöglicht einen schachtnahen Produktionsstandort. Niedrige Transportaufwendungen und flexible Anpassungsmöglichkeiten an sich wandelnde Qualitätsanforderungen des jeweiligen Verbrauchers stellen sich dann als Ergebnis ein.

Zementgebundene Grubenbaustoffe wie der erfindungsgemässe Baustotf haben den Vorteil, dass sie sich problemlos über lange Strecken pneumatisch, oder hydromechanisch fördern lassen. Als Nachteil aller zementgebundenen Baustoffe war bisher ihr erheblicher Anteil an lungengängigem Staub bei der pneumatischen Verarbeitung ein erhebliches Hemmnis für den Untertageeinsatz. Dieser Staub stammt zu einem grossen Teil aus der Dammbaustoffkomponente Flugasche. Da Abbrände aus Wirbelschichtfeuerungen erheblich gröber als Flugaschen sind, enthält der erfindungsgemässe Baustoff sehr viel weniger Pneumokoniose verursachende, lungengängige Staubpartikel als die bekannten flugaschehaltigen Dammbaustoffe. Die in den Wirbelschichtabbränden enthaltenen lungengängigen Staubteilchen lassen sich weit besser in dem Anmachwasser am Austrag benetzen, weil die Gesamtmatrix gröber ist.

Im ganzen lässt sich der erfindungsgemäss hergestellte Baustoff hydro-mechanisch und pneumatisch verarbeiten und kann darüberhinaus bei der vom Bau von Streckenbegleitdämmen vorherrschenden pneumatischen Verarbeitungsweise sehr viel weniger gesundheitsgefährdende Stäube entwickeln, als das bei den oben erwähnten Baustoffen bislang der Fall ist.

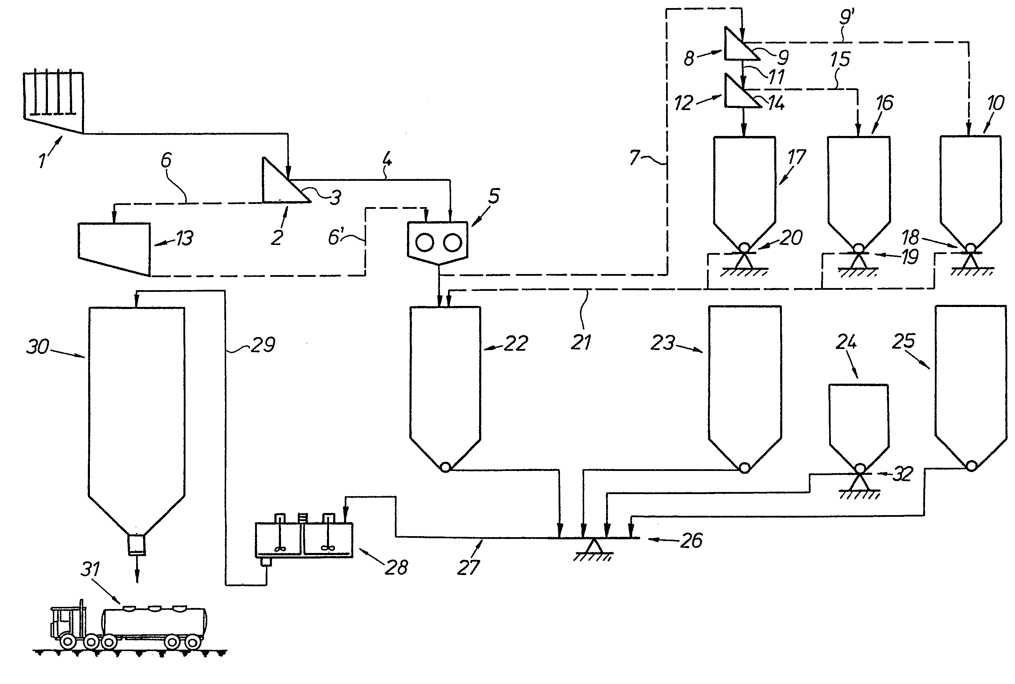

Im folgenden wird anhand eines Verfahrensstammbaumes zur Gewinnung von Grubenbaustoffen aus grünen Waschbergen und Wirbelschichtfeuerungsabbränden eine Ausführungsform der Erfindung beispielsweise anhand der Zeichnung erläutert.

Aus der bei 1 dargestellten Dichtesortierung von Rohwaschkohle auf Setzmaschinen aus einer im Ruhrkarbon fördernden Steinkohlenzeche fallen sogenannte grüne Waschberge an, die einer klassierenden Sortierung bei 2 unterworfen werden. Die Kornscheide des Siebes 3 liegt bei 70 mm, so dass der Sieberlauf das Korn grösser als 70 mm aufweist, das bei 4 einem Brecher 5 zugeführt wird. In einem Ofen 13 wird der Siebdurchgang 6 kleiner als 70 mm gesintert und dem Brecher 5 bei 6' zugeführt. In dem Brecher wird das Korn auf eine Korngrösse von kleiner als 8 mm heruntergebrochen. Gemäss dem dargestellten Ausführungsbeispiel wird das gebrochene Gut bei 7 einer Siebmaschine 8 zugeführt. Die Kornscheide des Siebes 9 liegt bei 5 mm, so dass der Sieböberlauf 9' das Korn grösser als 5 mm enthält und einem ersten Bunker 10 aufgegeben wird. Der Bunker enthält daher eine Kornspanne von 5 bis 8 mm.

Der Siebdurchgang 11 gelangt auf eine zweite Siebmaschine 12 und ihrem Sieb 14 auf eine Kornscheide, die auf 1 mm eingestellt ist. Folglich enthält der Sieböberlauf 15 das Korn grösser als 1 mm und der anschliessende Bunker 16 die Kornspanne 1 bis 5 mm.

Der Siebdurchgang der Siebmaschine 12 gelangt in den Bunker 17 der demzufolge die Kornspanne 0–1 mm enthält.

Unter den beschriebenen Bunkern 10, 16, 17 befinden sich Waagen 18, 19, 20, welche eine mengenmässge Dosierung der verschiedenen Kornspannen ermöglichen, wodurch sich das gewünschte Kornspektrum bei 21 herstellen lässt, das einem Zuschlagbunker 22 aufgegeben wird, der demzufolge die wie vorstehend bearbeiteten grünen Waschberge enthält.

Aus einem Bindemittelbunker 23, einem Bunker 24 für chemische Zusätze der eingangs beschriebenen Art und aus einem Bunker 25, welcher Wirbelschichtfeuerungsabbrände enthält, kann mit Hilfe einer zentralen Waage 26 der Baustoff zusammengesetzt werden, der über 27 einem Mischer 28 zugeführt wird, aus dem der fertige Baustoff bei 29 in einen Bunker 30 überführt wird. Gemäss dem dargestellten Ausführungsbeispiel werden aus dem Bunker Tankfahrzeuge 31 beschickt, die den fertigen Baustoff den Gruben anliefern.

Da die chemischen Zusätze aus dem Bunker 24 in relativ geringen Mengen zugesetzt werden, ist der Waage 26 unter dem Bunker 24 noch eine Waage 32 nachgeschaltet.

## Patentansprüche

1. Verfahren zur Verwertung von bei der Aufbereitung anfallenden Waschbergen, bei dem die Waschberge mit einem vorzugsweise hydraulischen Bindemittel versetzt und als beispielsweise pneumatisch förderbarer Baustoff im Untertagebetrieb eingesetzt werden, dadurch gekennzeichnet, dass die grünen Waschberge klassiert und dadurch der mit den harten Bestandteilen angereicherte Siebrückstand auf eine vorgegebene Siebkennlinie heruntergebrochen wird, worauf das gebrochene Gut entweder als Fegekorn oder als Zuschlagstoff zu einem einen Zusatzstoff und/oder das Bindemittel enthaltenden Baustoff zusammengesetzt wird.

2. Verfahren nach Anspruch 1, dadurch gekennzeichnet, dass bei Fegekorn das gebrochene Gut in Anteilen von 10–30 Gew.-% und als Zuschlagstoff in Anteilen von 50–90 Gew.-% mit einem Bindemittelzusatz von 70–90 Gew.-% bzw. 10–50 Gew.-% zusammengesetzt wird.

3. Verfahren nach einem der Ansprüche 1 oder 2, dadurch gekennzeichnet, dass bei der Zusammensetzung des Baustoffes ein oder mehrere Zusatzstoffe in Anteilen zwischen 10–50 Gew.-% bzw. 70–90 Gew.-% hinzugefügt werden.

4. Verfahren nach einem der Ansprüche 1 bis 3, dadurch gekennzeichnet, dass latent hydraulische Zusatzstoffe, vorzugsweise Wirbelschichtabbrände aus Flotationsbergen verwendet werden.

5. Verfahren nach einem der Ansprüche 1 bis 4, dadurch gekennzeichnet, dass die Waschberge nach ihrer Klassierung einer Dichtesortierung unterworfen werden und danach der Brechvorgang durchgeführt wird.

6. Verfahren nach einem der Ansprüche 1 bis 4, dadurch gekennzeichnet, dass der Siebdurchgang der klassierenden Sortierung der grünen Waschberge vor der Zusammensetzung zu dem Baustoff keramisiert wird.

7. Verfahren nach einem der Ansprüche 1 bis 6, dadurch gekennzeichnet, dass das gebrochene Gut auf unterschiedliche Korngrössen klassiert und aus diesen Fraktionen ein vorgegebener Zuschlag zusammengesetzt wird.

## Claims

1. A method of recovering tailings resulting from ore processing in which the tailings are treated preferably with an hydraulic adhesive and are utilised as, for example, pneumatic building material in underground workings, characterised in that the raw tailings are graded and the oversized ones enriched with hard components are broken down on a given characteristic filter line, after which the broken down product is put together, either as scouring grains or as aggregate, as a building material containing an additive and/or the adhesive.

2. A method according to Claim 1, characterised in that as scouring grains the broken down product is put together in proportions of 10–30 percent by weight or as aggregate it is put together in proportions of 50–90 percent by weight with 70–90 percent by weight or 10–50 percent by weight respectively of an adhesive additive.

3. A method according to either of Claims 1 or 2, characterised in that one or more additives are incorporated in proportions of 10–50 percent by weight or 70–90 percent by weight on putting together of the building material.

4. A method according to any of Claims 1 to 3, characterised in that latent hydraulic additives preferably fluid bed wastes from flotation salvage, are used.

5. A method according to any of Claims 1 to 4, characterised in that the tailings are subjected to density grading and thereafter the breaking process is effected.

6. A method according to any of Claims 1 to 4, characterised in that the undersized tailings from the graded sorting of the raw tailings are cera- mized before being put together as building materials.

7. A method according to any of Claims 1 to 6, characterised in that the broken down product is graded into different grain sizes and from these particles an additive as mentioned above is put together.

## Revendications

1. Procédé de récupération des déchets de lavage d'un minerai, consistant à mélanger ces déchets avec un liant, de préférence hydraulique, pour obtenir un matériau de construction transportable au moyen d'un système pneumatique, par exemple, et utilisable pour des travaux à exécuter au fond d'une mine, caractérisé en qu'on trie par criblage les déchets bruts de lavage, pour retenir une masse d'agrégats relativement gros, enrichie des constituants durs, que l'on concasse afin d'obtenir une courbe granulométrique prédéterminée; après quoi on utilise le produit ainsi concassé, soit tel quel comme granaille de raclage, soit en combinaison avec un additif et/ou avec le liant pour réaliser le matériau de construction.

2. Procédé selon la revendication 1, caractérisé en ce qu'on utilise les déchets concassés dans le matériau final, à raison d'une proportion pondérale comprise entre 10 et 30% dans le cas où ces déchets servent de granaille de raclage, et d'une proportion pondérale de 50 à 90% lorsque ces déchets concassés servent de charge dans le matériau, la proportion pondérale de liant avec lequel les déchets concassés sont mélangés étant respectivement comprise entre 70 et 90% et entre 10 et 50%.

3. Procédé selon l'une des revendications 1 ou 2, caractérisé en ce qu'on incorpore en mélange dans le matériau de construction au moins un additif, à raison d'une proportion pondérale comprise entre 10 et 50%, ou entre 70 et 90%.

4. Procédé selon l'une des revendications 1 à 3, caractérisé en ce qu'on utilise des additifs ayant des propriétés hydrauliques latentes, tels, de préférence, que des résidus de calcination provenant du brûlage de déchets de flottation, dans un lit fluidisé.

5. Procédé selon l'une des revendications 1 à 4, caractérisé en ce qu'on traite les déchets de lavage après leur criblage, pour les soumettre à un triage par densité, après quoi on effectue le concassage.

6. Procédé selon l'une des revendications 1 à 4, caractérisé en ce qu'on traite les agrégats constitués par les déchets bruts de lavage qui sont passés à travers le tamis de criblage, pour les céramiser avant de les incorporer dans le matériau de construction.

7. Procédé selon l'une des revendications 1 à 6, caractérisé en ce qu'on sépare par criblage les agrégats constitués par les déchets de lavage concassés, pour obtenir diverses tranches granulométriques à partir desquelles on compose, dans des proportions prédéterminées, un produit qu'on incorpore dans le matériau de construction.